Europäisches Patentamt

European Patent Office

Office européen des brevets

(19)

(11) Publication number: **0 300 834**
**A1**

# EUROPEAN PATENT APPLICATION

(21) Application number: 88306824.9

(22) Date of filing: 25.07.88

(51) Int. Cl.⁴: **F 16 L 57/00**

(30) Priority: 24.07.87 GB 8717564

(43) Date of publication of application:
25.01.89 Bulletin 89/04

(84) Designated Contracting States:
AT BE CH DE ES FR GB GR IT LI LU NL SE

(71) Applicant: **ANGUS FIRE ARMOUR LIMITED**
**Bentham**
**Lancaster LA2 7NA (GB)**

(72) Inventor: **Rodriguez, Alan**
**Lodge Farm Rabbit Lane**
**Gressingham Lancaster LA2 8LP (GB)**

**Price, Richard**
**Woodlands Springfield**
**High Bentham Nr. Lancaster LA2 8LP (GB)**

**Tyson, Peter G.**
**28 Democrat Drive**
**Basin 3154 Victoria (AU)**

(74) Representative: **Brooke-Smith, Fred et al**
**STEVENS, HEWLETT & PERKINS 5 Quality Court**
**Chancery Lane**
**London WC2A 1HZ (GB)**

(54) Hoses.

(57) There is provided a hose comprising a tubular textile jacket (11) having a lining (12) on its internal surface and a covering (10) on its external surface. The lining (12) and covering (10) are made of rubber or another suitable elastomeric material. A multiplicity of hard particles, made from e.g. glass, sand or alumina, are distributed through the covering (10). Such a hose has improved abrasion and cut-resistant characteristics whilst remaining highly flexible.

FIG.1

# Description

# HOSES

This invention relates to hoses and has a particularly useful but not exclusive application to hoses of the lay-flat variety which are used widely in fire-fighting applications.

Certain hoses need to be flexible for transport to the scene of use but to be resistant to external damage whilst in use. In order to maintain high liquid pressure in use, such hoses may comprise an elastomeric lining bonded internally to a textile reinforcement. Because damage to the textile reinforcement would lead to bursting of the hose when carrying pressurised fluid, the textile surface is frequently covered with an elastomeric material in order to protect it against abrasion and attack by, for example, chemical materials, fumes and heat. An additional source of damage in use arises when the hose is dragged across ground upon which is debris such as broken glass and other sharp edged or pointed articles.

According to a first aspect of the present invention there is provided a hose comprising a tubular textile jacket having a lining on its internal surface and a covering on its external surface, said lining and covering being made from rubber or elastomeric materials and at least a portion of said covering having distributed therein a multiplicity of hard particles.

In a preferred arrangement said portion is in the form of a continuous layer extending around the entire angular extent of the hose and the hose is of the lay-flat variety.

Preferably said particles have a MOH hardness of greater than 2.5 and are conveniently made, for example, from glass, sand or alumina. In further preferred arrangements the largest dimension of the particles is between 50 and 300 microns, their length to width ratio is less than say 5 to 1 and their concentration by volume in the covering material is between 1.5 and 10%.

It has been found to be desirable for the particles and/or the elastomeric material of said portion of the coating to be treated thereby to improve the adhesion between the particles and said material.

According to a second aspect of the present invention there is provided a method of making a hose comprising the steps of applying a lining made from rubber or elastomeric material to the internal surface of a tubular textile jacket and applying a covering made from rubber or elastomeric material to the external surface of the tubular textile jacket, at least a portion of said covering having distributed therein a multiplicity of hard particles.

Preferably said lining is extruded onto the internal surface of the jacket and the covering is extruded on to the external surface of the jacket.

In a preferred arrangement said covering comprises one or more layers, said portion containing hard particles being constituted by a layer.

The invention will now be described in more detail. The description makes reference to the accompanying diagrammatic drawings in which:

Figure 1 is a cross-sectional view of a hose according to the invention and

Figure 2 is a cross-sectional view of a second hose according to the invention.

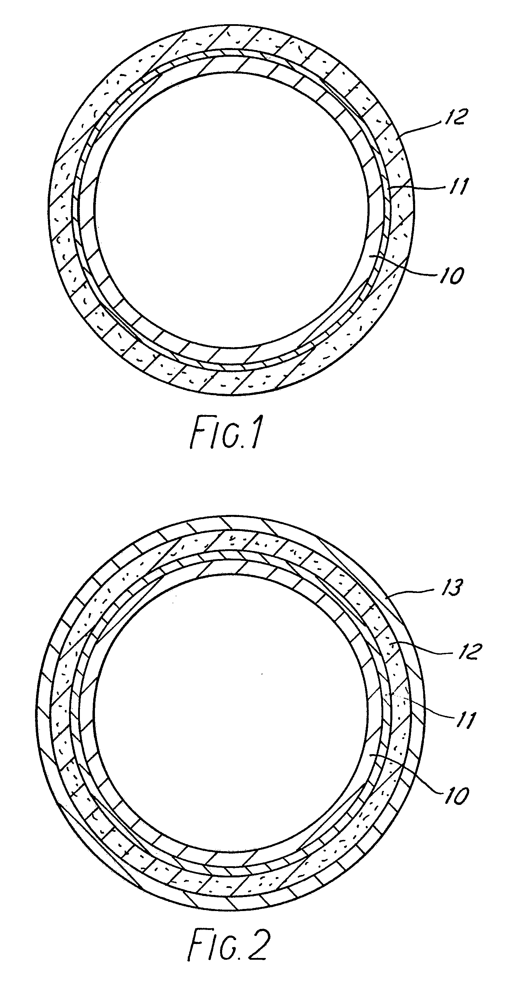

In Figure 1 there is shown a hose having an inner lining 10 made from an elastomeric material, such as a natural or synthetic rubber, or a thermoplastic elastomer, a textile reinforcement 11 which may be a coherent textile tube, made for example, by circular weaving, braiding or knitting of yarns such as nylon or polyester, or may be made by laying yarns which are then held in position by the elastomeric inner lining or by adhesives which also bind the yarns to the inner lining 10 and an outer cover 12 made from an elastomeric material such as a natural or synthetic rubber, or a thermoplastic elastomer. The outer cover 12 may be of the same or different material as that of the lining 10 and the material of the lining and of the cover may be vulcanisable, such as a PVC/Nitrile rubber.

Whilst it is desirable to have reinforced hoses having a high resistance to cutting, this requirement is not easily obtained in the cover surface of a hose which at the same time must have high flexibility in order to provide good coiling and handling properties, especially with lay-flat hoses. This is because materials which are resistant to being cut are generally of a hard and inflexible nature.

The outer cover 12 therefore contains a multiplicity of hard particles embedded therein. These particles preferably have a hardness of greater than 4 on the MOH hardness scale but particles having a hardness of above 2.5 are also suitable. Glass, sand an alumina are examples of materials which have been found to be suitable particularly glass in the form of microspheres. The largest dimension of the particles is ideally of the order of between 50 and 300 microns but it has been found that particularly good results are obtained when the longest dimension of the particles is between 150 and 250 microns. The term particles is taken to include short fibres having, for example, as the ratio of their length to their width 5 to 1 or less. It has been found that greater ratios can cause the elastomeric outer cover to lose its flexibility. The concentration of particles in the elastomeric outer cover, measured as a volume percentage of the elastomer, is preferably between 1.5% and 10%, particularly good results having been obtained when the concentration is between 2% and 6%.

In general hard particles do not adhere well to elastomeric materials and would be abraded out or dislodged from the elastomeric material. It is advantageous therefore to treat either the particles or elastomer so as to improve the adhesion.

Treatment of particles such as siliceous or glassy particles by, for example silanes, are known means of improving their adhesion properties. Similarly, inclusion of phenolic novolak resin precursors and cross linking agents which can be incorporated in vulcanisible rubbers can be used to ensure good adhesion between the elastomeric hose cover and the particles. These are of course only examples of suitable adhesion improving techniques.

Hoses, and particularly lay-flat hoses, having the above described construction show improved abrasion and cut resistance when dragged over hostile surfaces such as those on which broken glass or like sharp objects have been scattered. Furthermore lay-flat hoses retain the properties of high flexibility, ease of flattening into the lay-flat configuration, and ease of coiling into reels of small outside diameter.

There are a number of ways of making the above described hose. For example, the outer cover elastomer in which the hard particles have been distributed may be extruded onto the tubular textile reinforcement, and an inner impervious elastomeric lining, perhaps containing an outer coating of adhesive to facilitate adhesion to the reinforcement, can be pulled into the coated tubular fabric and adhered and vulcanised for example by internally applied pneumatic pressure and by heat. Steam at super-atmospheric pressure is one conventional means of doing this. The outer cover could also be in the form of a tube which is pulled over and adhered to the tubular reinforcement.

Alternatively, an inner impervious elastomeric lining can be inserted and optionally adhered into the tubular textile reinforcement in one process step, and the outer cover elastomer containing particles can be extruded onto the outside of the textile reinforcement. This step may be followed by a vulcanising process.

In a preferred process the inner lining is made by extruding elastomer through the pores of the textile jacket into a hollow mandrel, allowing it to flow to the tip of the hollow mandrel and thus depositing an interior lining on the inside of the textile sleeve. In a subsequent extrusion process, the elastomer containing discrete hard particles is applied to the outside of the textile reinforcement tube thereby to deposit an external cover containing discrete hard particles. These processes can be carried out consecutively, using two or more extruders feeding the elastomers to two separate extrusion heads, or they may be performed simultaneously using two extruders feeding two elastomer inputs into a single co-extrusion head. In the preferred process, the first extrusion of elastomer provides the inner lining, and the second extrusion uses an elastomer containing discrete hard particles and provides the outer protective cover for the hose. Clearly, by extending further the number of extruders, each feeding an elastomer, it is possible to provide hoses in which the elastomer containing discrete hard particles is sandwiched between elastomer layers not containing hard particles or in which an outer elastomer cover 13 having no hard particles therein is applied to the hose shown in Figure 1 to give the hose shown in Figure 2. Further, by adjusting the speeds of the extruders, in relationship to the forwarding speed of the textile reinforcement, the relative thickness and radial disposure with respect to the textile reinforcement tube can be controlled.

It will of course be appreciated that the elastomer of the lining 10 may be of the same or different basic formula to the elastomer in which the hard particles are distributed.

## Claims

1. A hose comprising a tubular textile jacket having a lining on its internal surface and a covering on its external surface, said lining and covering being made from rubber or elastomeric materials and at least a portion of said covering having distributed therein a multiplicity of hard particles.

2. A hose as claimed in claim 1, wherein said portion is in the form of a continuous layer extending around the entire angular extent of the hose and the hose is of the lay-flat variety.

3. A hose as claimed in claim 1 or claim 2, wherein said particles have a MOH hardness of greater than 2.5.

4. A hose as claimed in any one of claims 1 to 3, wherein said particles are made from sand, glass or alumina.

5. A hose as claimed in any one of claims 1 to 4, wherein the largest dimension of the particles is between 50 and 300 microns, their length to width ratio is less than 5 to 1 and their concentration by volume in the covering material is between 1.5 and 10%.

6. A hose as claimed in any one of claims 1 to 5, wherein the particles and/or the elastomeric material of said portion of the coating are treated thereby to improve the adhesion between the particles and said material.

7. A method of making a hose comprising the steps of applying a lining made from rubber or elastomeric material to the internal surface of a tubular textile jacket and applying a covering made from rubber or elastomeric material to the external surface of the tubular textile jacket, at least a portion of said covering having distributed therein a multiplicity of hard particles.

8. A method as claimed in claim 7, wherein said lining is extruded onto the internal surface of the jacket and the covering is extruded on to the external surface of the jacket.

9. A method as claimed in claim 7 or claim 8, wherein said covering comprises one or more layers, said portion containing hard particles being constituted by a layer.

10. A method as claimed in any one of claims 7 to 9, wherein the largest dimension of the particles is between 50 and 300 microns, their length to width ratio is less than 5 to 1 and their concentration by volume in the covering material is between 1.5 and 10%.

*FIG.1*

*FIG.2*

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 400 658 (VERSEIDAG-INDUSTRIETEXTILIEN G.M.B.H) * Page 2, lines 15-31; figures * | 1,3,6,7,9 | F 16 L 57/00 |
| A | DE-A-3 309 228 (MEGURO KAZUO) * Page 12, lines 21-29; figures; page 14, line 11 - page 13, line 4 * | 1-4,6 | |

TECHNICAL FIELDS SEARCHED (Int. Cl.4)

F 16 L

The present search report has been drawn up for all claims

| Place of search | Date of completion of the search | Examiner |
|---|---|---|
| THE HAGUE | 14-10-1988 | HUBEAU M.G. |

EPO FORM 1503 03.82 (P0401)